Europäisches Patentamt

European Patent Office

Office européen des brevets

(19)

(11) Numéro de publication : **0 091 327**
**B1**

(12) **FASCICULE DE BREVET EUROPÉEN**

(45) Date de publication du fascicule du brevet :
01.10.86

(51) Int. Cl.⁴ : **H 04 N   7/14**, H 04 M   3/56

(21) Numéro de dépôt : **83400338.6**

(22) Date de dépôt : **17.02.83**

(54) Système de visioconférence multisalle.

(30) Priorité : 30.03.82 FR 8205375

(43) Date de publication de la demande :
12.10.83 Bulletin 83/41

(45) Mention de la délivrance du brevet :
01.10.86 Bulletin 86/40

(84) Etats contractants désignés :
BE DE GB IT LU NL SE

(56) Documents cités :
FR-A- 2 195 142
FR-A- 2 312 904
FR-A- 2 320 015
FR-A- 2 345 872
US-A- 3 519 744
US-A- 3 601 530
REVIEW OF THE ELECTRICAL COMMUNICATION
LABORATORIES, vol. 21, nos 11-12, novembredécembre 1973, pages 779-791, Tokyo, JP., T. KAMAE
et al.: "Video and facsimile response equipment"

(73) Titulaire : **SOCIETE ANONYME DE TELECOMMUNI-
CATIONS**
41, rue Cantagrel
F-75624 Paris Cedex 13 (FR)

(72) Inventeur : **Moileron, Claude Auguste**
7, rue Jean-Jaurès
F-92260 Fontenay Aux Roses (FR)
Inventeur : **Vautier, Daniel Robert**
10, allée Schubert
F-91410 Dourdan (FR)
Inventeur : **Poblon, Jean-Marc**
8, rue de l'Ouye
F-91410 Dourdan (FR)

(74) Mandataire : **Martinet & Lapoux**
62, rue des Mathurins
F-75008 Paris (FR)

## Description

La présente invention concerne un système de visioconférence multisalle tel que défini dans le préambule de la revendication 1. Le système permet la transmission d'images animées, de signaux de parole et de signaux de service, tel que télécopie, entre des groupes de personnes occupant des salles localisées à des endroits différents et leur facilite une conversation collective dans des conditions voisines d'une réunion. L'invention concerne plus particulièrement un système de visioconférence mettant en œuvre un réseau de communication visiophonique.

Des liaisons visiophoniques sont bien connues. On sait qu'elles sont avantageuses pour leur faible bande passante (1 MHz pour une définition d'image de 250 lignes à 250 points).

Un système de visioconférence multisalle est déjà décrit dans le U.S.-A-3 519 744. Selon ce brevet, une unité de commande de commutation installée dans un unique central de commutation de signaux vidéo commun à toutes les salles détecte des signaux de parole dans des voies entrantes de transmission de parole afin de déterminer la salle d'un présent intervenant, et en réponse à cette information, connecte des voies sortantes reliées à des récepteurs vidéo dans les autres salles à la voie entrante reliée à la caméra dans la salle du présent intervenant, à travers des commutateurs vidéo assignés respectivement aux salles. La transmission des signaux vidéo et de parole dans ce système est effectuée sous forme analogique et la commutation des signaux vidéo est du type spatial, et commandée par des relais. Ceci limite considérablement les possibilités du système en ce qui concerne le nombre de salles à relier pendant une même visioconférence et la localisation de ces salles.

La présente invention vise un double but. D'une part, elle fait appel aux techniques de commutation et de multiplexage du type temporel afin de relier des salles très éloignées, notamment reliées à travers des systèmes de commutation terrestres et par satellite.

D'autre part, du fait de la mise en œuvre de techniques de multiplexage temporel, l'invention permet de décentraliser la sélection de la salle où est situé le présent intervenant, dans chaque système ou central de commutation du réseau de commutation visioconférence desservant au moins une salle, afin de réaliser une visioconférence entre quelques salles parmi un grand nombre de salles disséminées sur un territoire national ou international, et en outre, permet l'échange de signaux de services annexes, tels que télécopie, entre salles.

Ainsi chaque salle est raccordée à un système de commutation éventuellement différent. Toutefois, chaque système de commutation raccordé à une régie de visioconférence gérant une salle de visioconférence est équipé d'un auxiliaire de visioconférence remplissant la fonction d'organe de décision et permettant de sélectionner l'image de la salle où se trouve le locuteur intervenant et de gérer le service. La régie propre de la salle où se trouve le locuteur intervenant peut assumer ensuite les fonctions de gestion internes à la salle telle que la sélection du locuteur parmi toutes les images de locuteur de la salle.

A ces fins, l'invention a pour objet un système de visioconférence multisalle tel que caractérisé dans la revendication 1.

Le système de visioconférence selon l'invention est pourvu d'un auxiliaire de visioconférence échangeant des messages avec le système de commutation, et ce pour chaque salle, l'auxiliaire d'une salle étant désigné avant chaque visioconférence comme maître, et transmettant alors seul parmi tous les auxiliaires audit système de commutation le numéro de voie de l'image de la salle à visualiser où se trouve le locuteur intervenant, les autres auxiliaires dits esclaves ne le transmettant pas.

Chaque auxiliaire est formé de trois modules. Un premier module à processeur réalise l'émission et la réception des signaux échangés avec ledit système de commutation. Un second module à réseau de connexion est adapté pour brasser les voies de son entrantes. Un troisième module dit de visioconférence reconnaît l'attribution dynamique des voies entrantes, effectue la somme des voies de son en excluant la voie de son locale, traite la signalisation de télécopie, et détecte la voie de son de l'intervenant. La détection de la voie de son de l'intervenant est basée sur une méthode de comparaison des amplitudes des signaux de son produits par toutes les salles pendant une durée de temporisation prédéterminée.

L'auxiliaire reçoit du système de commutation les voies entrantes de son de toutes les salles, la voie entrante de signalisation de service et transmet au système de commutation, à destination de la salle de visioconférence qui lui est associée, la somme des voies de son exempte de la voie de son locale, une signalisation de service en retour et, s'il est maître, la désignation du locuteur intervenant.

L'invention permet une gestion de la visioconférence par l'auxiliaire, indépendamment de l'organisation du multiplex numérique regroupant les voies entrantes et du type de système de commutation. En effet, le module à réseau de connexion est associé à une mémoire de commande qui permet l'attribution dynamique des fonctions attribuées aux différentes voies numériques entrantes, les numéros de voies n'étant pas préassignés aux fonctions portées par celles-ci. L'auxiliaire confère au système de visioconférence une grande souplesse de fonctionnement.

D'autres caractéristiques et avantages de l'invention apparaîtront plus clairement à la lecture de la description suivante d'un mode de réalisation préféré en référence aux dessins annexés correspondants dans lesquels :

la figure 1 est un bloc-diagramme très général d'une partie du système de visioconférence multisalle concernant l'interconnexion d'un système de commutation à la régie d'une salle de visioconférence et à un auxiliaire de visioconférence associé ;

la figure 2 est un bloc-diagramme détaillé d'un auxiliaire de visioconférence selon l'invention ; et

la figure 3 est un bloc-diagramme du circuit de détection de la voie de son entrante assignée à la salle où est le présent intervenant.

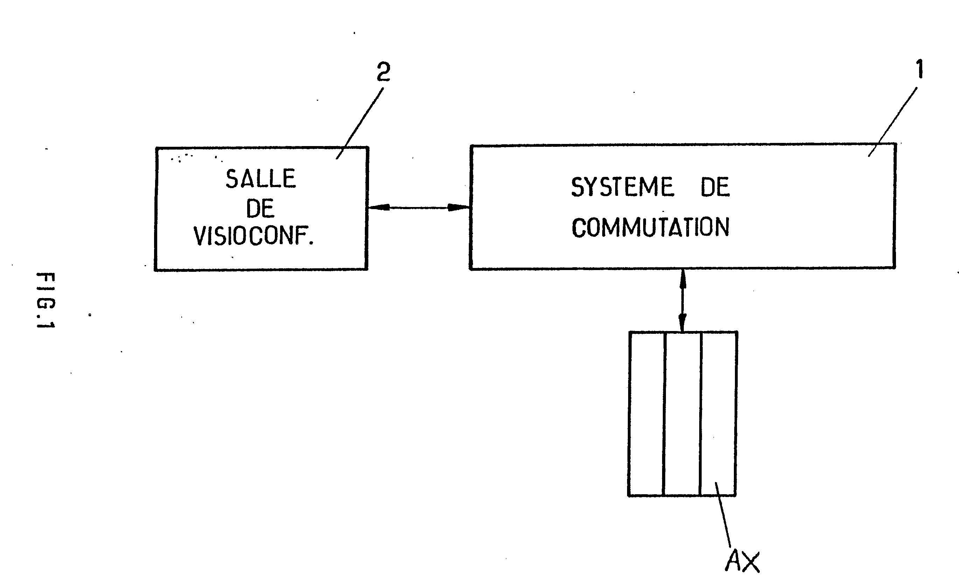

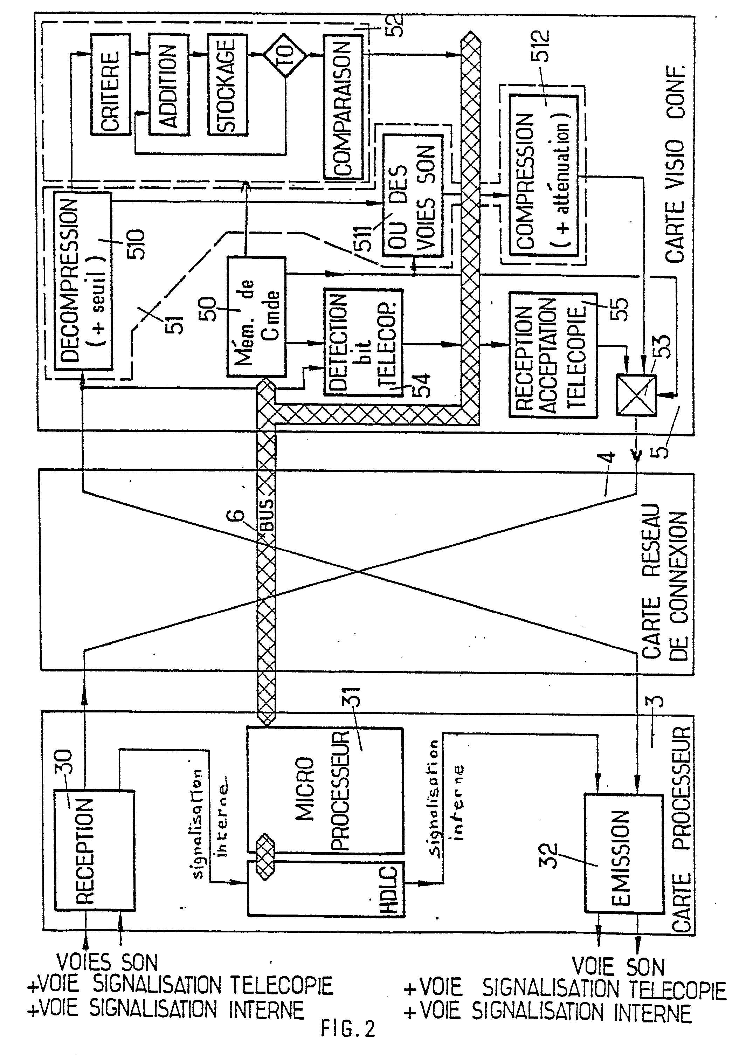

En se référant à la Fig. 1, un système de commutation numérique tel qu'un commutateur numérique connu 1 est rattaché à une salle de visioconférence 2. Chaque salle 2 est équipée d'une régie de contrôle et de commutation permettant de gérer la réception et la transmission des signaux échangés avec le système de commutation 1. La régie de la salle de visioconférence est reliée au système de commutation 1 au moyen d'un multiplex numérique bidirectionnel à 2 Mbit/s formé par multiplexage à division du temps de voies numériques à 64 kbit/s. Les voies à 64 kbit/s sont essentiellement une voie de son, une voie de télécopie, des voies d'image et une voie de signalisation de télécopie. Le multiplex bidirectionnel permet l'échange des voies de son, de signalisation de télécopie avec d'autres régies de salles de participants qui sont elles-mêmes raccordées au même système de commutation ou de préférence, à d'autres systèmes de commutation distants. En effet, l'invention vise à recréer des conditions normales de conférence à distance ; une conférence visiophonique entre deux salles rattachées au même système de commutation serait certes possible mais surchargerait les lignes du réseau visiophonique.

Afin de gérer les échanges d'informations de télécopie et de choisir l'image visiophonique de la salle où se trouve le locuteur intervenant, il est nécessaire d'adjoindre au système de commutation un auxiliaire de visioconférence AX pour chaque salle de visioconférence. Un tel auxiliaire AX n'est toutefois pas relié à la régie de la salle de visioconférence respective 2 mais au système de commutation 1 grâce à un multiplex numérique bidirectionnel à quatre trains numériques entrants de débit 2 Mbit/s dans le sens système de commutation-auxiliaire et à quatre trains numériques sortants de débit 2 Mbit/s dans le sens auxiliaire-système de commutation. De plus, l'interface entre l'auxiliaire AX et le système de commutation 1 comprend une distribution d'horloge et de synchronisation de trame. Les voies entrant dans l'auxiliaire AX sont toutes banalisées exceptée une voie entrante réservée à la signalisation interne entre le système de commutation 1 et l'auxiliaire AX. Ces voies banalisées sont la voie de son locale à 64 kbit/s, la voie de signalisation de télécopie à 64 kbit/s et les voies de son de toutes les autres salles admises à la visioconférence. Les voies sortant de l'auxiliaire AX sont aussi banalisées, exceptée une voie sortante de signalisation interne, et sont au moins une voie réservée à la somme des voies de son et une voie réservée à la signalisation de télécopie.

Les fonctions essentielles de l'auxiliaire de visioconférence AX consistent à détecter la voie de son assignée à la salle où se trouve le locuteur intervenant, et à gérer des services annexes tels que la télécopie.

Ainsi qu'il sera détaillé par la suite, l'auxiliaire de visioconférence AX est indépendant du système de commutation auquel il est raccordé. De plus, en début de visioconférence, un auxiliaire AX est prédéterminé comme station maître et les autres auxiliaires, bien qu'en fonctionnement, sont asservis à des fonctions d'esclaves. Un tel auxiliaire maître peut alors effectuer le choix de l'intervenant à visualiser dans les salles et ceci pour toutes les salles participant à la conférence. La station maître est, en principe, la station taxée.

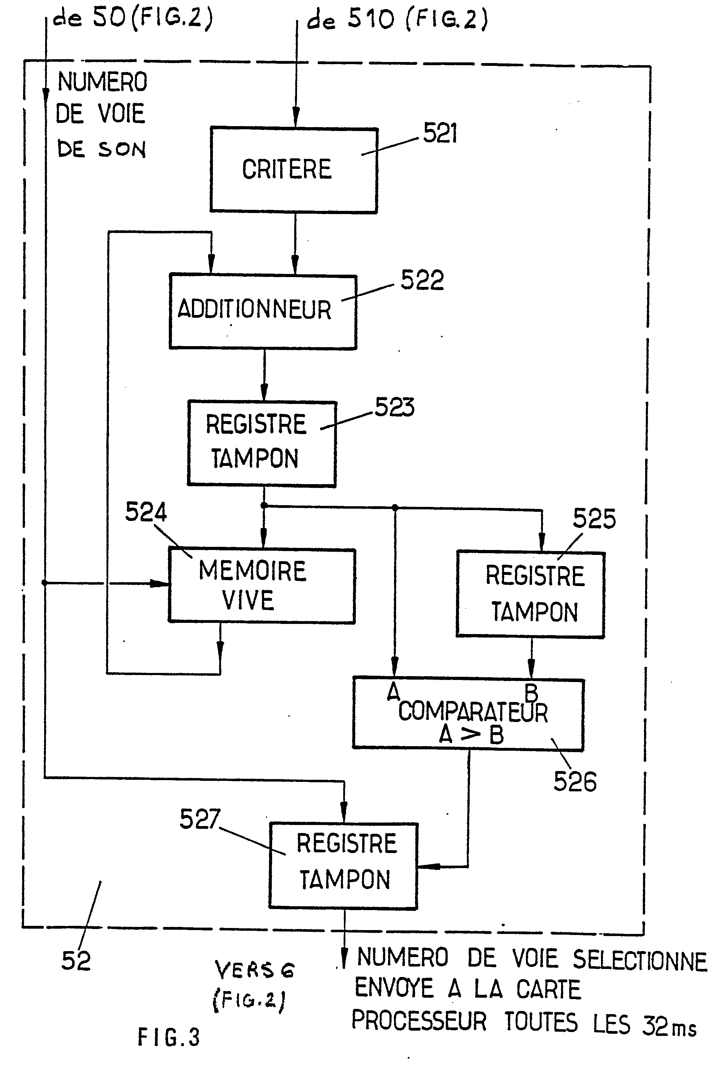

La Fig. 2 représente schématiquement les trois modules enfichables formant un auxiliaire de visioconférence AX selon l'invention.

Un module enfichable 3 à processeur réalise l'interface logicielle entre l'auxiliaire AX proprement dit et l'unité centrale du système de commutation 1. Il comprend un circuit de réception 30, un microprocesseur 31 et un circuit d'émission 32. Des entrées du circuit de réception 30 reçoivent les voies de son, de signalisation de télécopie et de signalisation interne provenant du système de commutation 1. La signalisation interne est transmise à travers le circuit de réception 30 au microprocesseur 31 qui délivre sa signalisation interne en retour vers le système de commutation 1 à travers le circuit d'émission 32.

Un module enfichable 4 à réseau de connexion reçoit les informations, autres que la signalisation interne, fournies par la sortie du circuit de réception 30 ou transmet des informations vers le circuit d'émission 32. En effet, le réseau de connexion 4 permet de brasser les voies entrantes, c'est-à-dire d'établir des connexions entre les voies numériques à 64 kbit/s portées par 4 trains à 2 Mbit/s sans que les numéros de voies soient préassignés. Ce réseau 4 permet une attribution dynamique des fonctions des différentes voies. Une mémoire de commande 50 permet de définir la constitution du multiplex entrant. Cette mémoire de commande 50 se trouve dans un troisième module enfichable de l'auxiliaire AX, ce troisième module étant appelé carte de visioconférence 5. Il réalise les fonctions spécifiques de la visioconférence, c'est-à-dire essentiellement la somme des voies de son, le traitement de la signalisation de télécopie et la sélection du présent intervenant.

La fonction somme des voies de son est assurée au moyen d'un dispositif 51 de la carte de visioconférence 5 montrée à la Fig. 2. Le dispositif 51 comprend en série un circuit de décompression 510, un dispositif d'addition (fonction OU) 511 et un circuit de compression 512. Les différentes voies de son des salles de visioconférence proviennent du module à réseau de connexion 4 et arrivent sur la carte de visioconférence 5. Ces voies sont définies par le système de commutation 1 qui indique en outre la voie de son locale qui est celle provenant de la salle directement reliée au système de commutation 1. Les échantillons de parole sont ainsi appliqués à l'entrée du dispositif 51 sous la forme de mots codés à 8 bits suivant une loi de transcodage semi-logarithmique conformément à l'avis G 711 du Comité Consultatif International Télégraphique et Téléphonique (C.C.I.T.T.). Le circuit de décompression 510 incluant une mémoire linéarise ces échantillons, c'est-à-dire les code en mots à 12 bits en fonction de la loi de transcodage précitée. Puis dans le dispositif 51, les échantillons linéarisés à la sortie du circuit 510 sont délivrés à l'entrée du dispositif d'addition 511 effectuant une addition algébrique de ces échantillons. Un tel dispositif 511 d'addition de voies de son est déjà décrit dans la FR-A-2 472 318 au nom de l'actuelle demanderesse. Le système de commutation 1 fournit par l'intermédiaire d'un bus d'informations bidirectionnel 6 qui relie le microprocesseur 31 à des circuits de la carte de visioconférence 5, et de la mémoire de commande 50 l'adresse de la voie de son locale qui, elle, n'est pas additionnée aux autres voies de son. En effet, les voies de son des différentes salles peuvent provenir de distances importantes. Par exemple dans le cas de transmission par satellite, une somme de la voie de son locale aux autres voies de son introduirait des perturbations de type écho. En effet, les voies de son peuvent arriver avec un retard de l'ordre de 280 à 300 ms et le présent intervenant entendrait sa voix, sans affaiblissement, décalée d'un retard de l'ordre de 280 à 300 ms. Le signal sortant du dispositif d'addition 511 est appliqué à l'entrée du circuit de compression 512 dans lequel les échantillons subissent un transcodage 12 bits-8 bits en fonction de la loi semi-logarithmique précitée.

Dans le circuit 510, en même temps que la décompression, il est également possible de ne prendre en compte que les échantillons supérieurs à un seuil prédéterminé. Ceci permet d'éliminer notamment les bruits de fond. De même, il est également possible d'appliquer une atténuation sur le signal somme dans le circuit 512 en même temps que l'opération de transcodage.

Le troisième module dit carte de visioconférence 5 comprend également un multiplexeur 53 à l'entrée duquel le signal somme des sons sortant du dispositif 51 est appliqué avant d'être transmis par le réseau de connexion 4 puis par le circuit d'émission 32 de la carte processeur 3 à destination du système de commutation 1.

La mémoire de commande 50 reçoit des informations transmises par le microprocesseur 31 du module 3 par l'intermédiaire du bus d'informations bidirectionnel 6. Ainsi, la mémoire de commande 50 est chargée par un message décrivant des caractéristiques de la visioconférence, telles que le nombre de participants et l'affectation de numéros aux diverses voies.

Dans le module 5, un circuit de détection de la signalisation télécopie 54 reçoit une information extraite du train numérique de données transmis par le réseau de connexion 4. Ainsi par exemple, on peut affecter un intervalle de temps, prédéterminé dans la trame MIC, à 64 kbit/s, à la signalisation de télécopie. La mémoire de commande 50 applique à une entrée du circuit 54 un signal d'insertion de changement d'état du bit de signalisation. Le circuit 54 émet un signal sur le bus 6 à destination du microprocesseur 31 du module 3. Celui-ci avertit le système de commutation 1 par un message de service transmis sur la voie sortante de signalisation interne. Le système de commutation 1 pourra alors réaliser la liaison demandée. Lorsque la liaison est établie, le système de commutation 1 envoie un message à l'auxiliaire AX en vue d'autoriser la transmission du signal de télécopie. La réception de ce message au moyen de la voie entrante de signalisation interne est reçue à travers le circuit de réception 30 par le microprocesseur 31 qui transmet au moyen du bus 6 un signal d'acceptation de télécopie à l'entrée d'un registre 55.

Cette information de signalisation de télécopie est extraite du registre 55 et remultiplexée avec le signal de somme des voies de son dans le multiplexeur 53 selon les affectations de voies fournies par une sortie de la mémoire de commande 50.

Dans la pratique, on peut réduire la signalisation de télécopie à un seul bit, le changement d'état du bit en provenance de la salle de visioconférence correspondant alors soit à un appel, soit à une libération selon que la transition est positive ou négative. Cette information de signalisation de télécopie est envoyée par la salle qui a demandé l'établissement d'une liaison de télécopie et qui recevra l'acquittement de cette demande.

Le module 5 comprend en outre un circuit 52 de détection de la voie de son entrante assignée à la salle où est le présent intervenant afin que le système de commutation sélectionne les voies de son et d'image entrante de cette salle et afin que le son et l'image de la salle sélectionnée soient reçus par les régies des autres salles. Le circuit 52 montré en détail à la Fig. 3 reçoit les échantillons codés en mots de 12 bits issus du circuit de décompression 510. Un circuit 521 choisit le critère de traitement des échantillons de parole. En effet, divers critères sont susceptibles d'être adaptés selon l'application choisie. Le carré de l'amplitude des échantillons donne un résultat voisin d'une énergie sonore. Un tel critère confère une grande rapidité au système mais est plus sensible au bruit. Ainsi, un bruit bref et violent sera également sélectionné.

La racine carrée de l'amplitude des échantillons est un critère permettant d'atténuer les bruits mais confère une lenteur de commutation dans la sélection de l'intervenant dont la salle est à visualiser.

Le critère préféré de l'invention est fondé sur la comparaison des sommes des amplitudes des échantillons pendant une durée prédéterminée. En effet, ce critère confère au système de visioconférence un bon compromis entre une atténuation des bruits de perturbation et une rapidité de commutation satisfaisante.

Les amplitudes des échantillons en sortie du circuit 521 sont appliquées à une première entrée d'un additionneur 522 dans lequel les échantillons d'une même voie de son sont additionnés entre eux. A cet effet, un registre tampon 523 permet de stocker en mémoire ces échantillons pendant les 32 ms de traitement d'une voie de son. La sortie du registre tampon 523 est raccordée à une mémoire vive 524 dont la sortie permet de réinjecter le résultat partiel de l'addition à une seconde entrée de l'additionneur 522 dans lequel le nouvel échantillon appliqué à la première entrée de l'additionneur 522 est additionné au résultat partiel. Après une première durée de 32 ms, le résultat des additions partielles itératives est délivré à un registre tampon 525. A la fin d'une durée de 32 ms, le nouveau résultat de chaque voie de son est comparé au résultat de voie de son précédent au moyen d'un comparateur 526. Seul le résultat le plus élevé est conservé. Lorsque toutes les voies de son sont ainsi traitées et comparées entre elles, seul le résultat de la voie ayant le niveau le plus élevé est, en sortie du comparateur 526, appliqué à l'entrée d'un registre tampon 257. A ce résultat le plus élevé est adjoint dans le registre tampon 527 le numéro de la voie de son correspondant fourni par la mémoire de commande 50. En sortie de ce registre 527, le numéro de voie de son sélectionné est envoyé à travers le bus 6 toutes les 32 ms au microprocesseur 31 qui transmet cette information au système de commutation 1 via la voie sortante de signalisation interne.

Pendant une visioconférence, tous les auxiliaires, et en particulier tous les circuits 52 des auxiliaires AX, effectuent ce traitement mais seule la sélection effectuée par l'auxiliaire maître est envoyée vers le système de commutation qui transmet alors l'image de la salle sélectionnée vers les autres salles de conférence. Ce message représentatif de la sélection est émis par le microprocesseur 31 au bout d'une durée de temporisation prédéterminée TS égale à un multiple entier de 32 ms. En effet, le microprocesseur 31 attend seize confirmations successives de ce résultat fourni par le circuit de sélection 52, soit environ 500 ms, avant de transmettre le numéro de la voie de son sélectionnée au système de commutation 1. De façon avantageuse, les messages sur la voie de signalisation interne sont acheminés par l'intermédiaire du circuit d'émission 32 selon une procédure connue de transmission en mode-paquet, telle que celle connue sous le sigle HDLC (de l'américain « High Data Link Control ») et dite de commande de chaînon à haut niveau défini par l'Organisation Internationale de Normalisation (ISO). Tous les messages de service nécessaires à la gestion de la visioconférence sont portés par la voie de signalisation interne préassignée.

Un tel auxiliaire de visioconférence permet de traiter une seule visioconférence mais il serait possible, sans changer le principe de l'invention, de traiter différentes visioconférences avec un seul auxiliaire.

Il est à noter que le présent intervenant peut recevoir sa propre image ou l'image du précédent intervenant, la régie de la salle dans laquelle il se trouve étant susceptible de répondre à sa demande sans intervenir sur le traitement de l'auxiliaire de visioconférence selon l'invention.

Il n'est fait aucune hypothèse dans la présente invention sur la réalisation du système de commutation 1 ; l'auxiliaire de l'invention permet en effet de s'adapter à tout système. Le rôle du système de commutation 1 est, après l'établissement initial des voies de son et de signalisation de télécopie vers l'auxiliaire, d'établir les connexions des voies d'images et des voies de télécopie sur la demande de l'auxiliaire AX.

## Revendications

1. Système de visioconférence multisalle comprenant des moyens de commutation numériques (1) et des salles de visioconférence incluant chacune une régie (2) reliée aux moyens de commutation (1) par des voies numériques bidirectionnelles multiplexées de son, d'images et de service, tel que télécopie, permettant notamment de transmettre à la régie la somme des sons provenant des autres salles, une image d'une autre salle, caractérisé en ce qu'il comprend des moyens auxiliaires de visioconférence (AX) respectivement associés aux salles de visioconférence (2), chaque moyen auxiliaire (AX) étant relié aux moyens de commutation (1) par un multiplex numérique bidirectionnel qui convoie notamment des voies entrantes de son provenant de toutes les salles, une voie sortante de somme des sons, des voies entrantes et sortantes de signalisation de service et des voies entrante et sortante de signalisation interne, et comprenant des moyens de signalisation interne (3) reliés au multiplex numérique bidirectionnel, un réseau de connexion (4) des voies de son et de signalisation de service, et des moyens (5) reliés aux moyens de signalisation interne (3) à travers le réseau de connexion (4) pour traiter les voies entrantes de son et de signalisation de service, les moyens de signalisation interne (3) comprenant des moyens de gestion de signalisation interne (31) entre les moyens de commutation (1) et les moyens pour traiter (5), des moyens (30) pour transmettre la voie entrante de signalisation interne aux moyens de gestion (31) et les autres voies entrantes aux moyens pour traiter (5) à travers le réseau de connexion (4), et des moyens (32) pour recevoir la voie sortante de signalisation interne des moyens de gestion (31) et les autres voies sortantes des moyens pour traiter (5), à travers le réseau de connexion (4), les moyens pour traiter (5) comprenant des moyens (50) à mémoire pour reconnaître les voies entrantes de son et de signalisation de service entre elles en fonction de caractéristiques transmises par la voie entrante de signalisation interne à travers les moyens de gestion (31), des moyens (51) pour additionner les voies entrantes de son, à l'exception de la voie entrante de son de la salle (2) associée audit moyen auxiliaire (AX), en la voie sortante de somme des sons, des moyens (52) pour sélectionner la voie entrante de son assignée à l'une des salles où est situé un présent intervenant, des moyens (54) pour détecter une demande de transmission de service provenant de l'une des salles dans l'une des voies entrantes de signalisation de service afin de transmettre dans la voie sortante de signalisation interne à travers les moyens de gestion (31) une autorisation d'établissement de liaison de service entre les deux salles, des moyens (55) pour transmettre un accusé de réception de l'établissement de liaison de service dans la voie sortante de signalisation de service assignée à la salle ayant demandé ladite autorisation, et des moyens (53) pour multiplexer la voie sortante de somme des sons et les voies sortantes de signalisation de service.

2. Système selon la revendication 1, caractérisé en ce que le moyen auxiliaire (AX) associé à l'une des salles (2) est désigné comme maître avant chaque visioconférence, les moyens pour sélectionner (52) dans le moyen auxiliaire maître transmettant seul parmi tous les autres moyens auxiliaires le numéro de la voie entrante de son sélectionnée dans la voie sortante de signalisation interne à travers les moyens de gestion (31), et les autres moyens auxiliaires étant esclaves du moyen auxiliaire maître et ne transmettant pas le numéro de la voie de son sélectionnée.

3. Système selon la revendication 1 ou 2, caractérisé en ce que les moyens pour sélectionner de la voie entrante de son assignée à la salle du présent intervenant (52) comprennent des moyens (522, 523, 524) pour additionner les échantillons dans chacune des voies entrantes de son pendant une première durée prédéterminée (32 ms) en une somme d'amplitude de son respective et des moyens (525, 526) pour comparer les sommes d'amplitude en vue de transmettre le numéro de la voie entrante de son ayant la plus élevée somme d'amplitude dans la voie sortante de signalisation interne.

4. Système selon la revendication 3, caractérisé en ce que le moyen auxiliaire (AX) comprend des moyens (31) pour transmettre le numéro de la voie entrante de son ayant la plus élevée somme d'amplitude dans la voie sortante de signalisation interne vers les moyens de commutation (1) lorsque ladite voie entrante de son a la plus élevée somme d'amplitude pour chacune des premières durées successives incluses dans une durée de temporisation (TS) égale à un multiple de la première durée prédéterminée (32 ms).

**Claims**

1. Multiple-room video conference system comprising digital switching means (1) and video conference rooms each including a production control unit (2) connected to the switching means (1) through two-way multiplexed digital channels of sound, images and service, such as fascimile, allowing particularly transmitting to the control unit department the sum of sounds from others rooms, an image from an other room and a service signal delivered by the control unit of another room, characterized in that it comprises auxiliary video conference means (AX) respectively associated to the video conference, rooms (2), each auxiliary means (AX) being connected to the switching means (1) through a two-way digital multiplex path which carries particularly incoming sound channels from all the rooms, an outgoing sound sun channel, incoming and outgoing service signalisation channels and incoming and outgoing internal signalisation channels, and comprising internal signalisation means (3) connected to the two-way digital multiplex path, a switching unit (4) for sound channels and service signalisation channels and means (5) connected to the internal signalisation means (3) via the switching unit (4) for processing the incoming sound and service signalisation channels, the internal signalisation means (3) comprising internal signalisation managing means (31) between the switching means (1) and the processing means (5), means (30) for transmitting the incoming internal signalisation channel to the managing means (31) and the others incoming channels to the processing means (5) via the switching unit (4), and means (32) for receiving the outgoing internal signalisation channel from the managing means (31) and the others outgoing channels from the managing means (4) via the switching unit (4), the processing means (5) comprising means with memory (50) for recognizing, between them, the incoming sound and service signalisation channels as a function of characteristics transmitted on the incoming internal signalisation channel through the managing means (31), means (51) for adding the incoming sound channels, except for the incoming sound channel of the room (2) which is associated to said auxiliary means (AX), into the incoming sound sum channel, means (52) for selecting the incoming sound channel assigned to one of the rooms where is localized a present conference, means (54) for detecting service transmission request delivered from one of the rooms, on one of the incoming service signalisation channels thereby transmitting onto the outgoing internal signalisation channel through the managing means (31), an authorization of service link seizing relatively to the two rooms, means (55) for transmitting a service link seizing acknowlegdgement into the outgoing service signalisation channel assigned to the room that asked said authorization, and means (53) for multiplexing the outgoing sound sum channel and the outgoing service signalisation channels.

2. System according to claim 1, characterized in that the auxiliary means (AX) associated to one of the rooms (2) is designated as master before each video conference, the selecting means (52) in the master auxiliary mean alone transmitting among all the other auxiliary means the number of the incoming sound channel selected in the outgoing internal signalisation channel through the managing means (31), and the other auxiliary means being slaves of the master auxiliary mean and not transmit the number of the selected sound channel.

3. System according to claim 1 or 2, characterized in that the means (52) for selecting the incoming sound channel assigned to the room of the present conference comprise means (522, 523, 524) for adding samples in each of the incoming sound channels for a first predetermined duration (32 ms) into a respective sound amplitude sum and means (525, 526) for comparing the amplitude sums thereby transmitting the number of the incoming sound channel having the highest amplitude sum into the outgoing internal signalisation channel.

4. System according to claim 3, characterized in that the auxiliary means (AX) comprises means (31) for transmitting the number of the incoming sound channel having the highest amplitude sum into the outgoing internal signalisation channel to the switching means (1) when said incoming sound channel has the highest amplitude sum for each of the successive first durations included in a timing duration (TS) equal to a multiple of the first predetermined duration (32 ms).

**Patentansprüche**

1. Videokonferenzsystem für mehrere Säle, mit einer digitalen Schalteinrichtung (1) und Videokonferenzsälen (2), von denen jeder eine mit der Schalteinrichtung (1) über digitale, in beiden Richtungen wirksame, multiplexierte Übertragungsstrecken für Ton, Bild und Serviceleistungen, wie Telekopieren, verbundene Regieeinrichtung aufweist und die Übertragungsstrecken insbesondere die Übertragung der Summe der aus den anderen Sälen anfallenden Tonanteile, eines Bildes aus einem anderen Saal und eines von der Regieeinrichtung eines anderen Saales gelieferten Servicesignals auf die Regieeinrichtung erlaubt, dadurch gekennzeichnet, daß sie Videokonferenz-Hilfseinrichtungen (AX) aufweist, die den Videokonferenzsälen (2) zugeordnet sind, wobei jede Hilfseinrichtung (AX) mit der Schalteinrichtung (1) über eine digitale, in beiden Richtungen wirksame Multiplex-Übertragungsstrecke verbunden ist, die insbesondere von allen Sälen kommende Toneingangsleitungen, eine Tonsummen-Ausgangsleitung, Eingangs- und Ausgangsleitungen für Servicesignale und Eingangs- und Ausgangsleitungen für interne Signale umfaßt, sowie eine Einrichtung (3) für eine interne Signalgabe, die mit der digitalen und in beiden Richtungen wirksamen Multiplex-Übertragungsstrecke verbunden ist, ein Verbindungsnetzwerk (4) für die Tonleitungen und die Servicesignalleitungen und eine Einrichtung (5) zum Behandeln der Toneingangsleitungen und der Servicesignal-Eingangsleitungen, die mit der internen Signalgabeeinrichtung (3) über das Verbindungsnetzwerk (4) gekoppelt ist, aufweist ; wobei die interne Signalgabeeinrichtung (3) eine zwischen der Schalteinrichtung (1) und der Behandlungseinrichtung (5) angeordnete Einrichtung (31) zur Verwaltung der internen Signale, eine Einrichtung (30) zur Verbindung der Eingangsstrecke für die internen Signale mit der Verwaltungseinrichtung (31) und zur Verbindung der anderen Eingangsleitungen mit der Behandlungseinrichtung (5) über das Verbindungsnetzwerk (4), und eine Einrichtung (32), zu welcher die Ausgangsleitung für die internen Signale der Verwaltungseinrichtung (31) und die anderen Ausgangsleitungen der Behandlungseinrichtung (5) über das Verbindungsnetzwerk (4) führen, aufweist ; wobei die Behandlungseinrichtung (5) eine Speichereinrichtung (50) zum Erkennen der Toneingangsleitungen und der Servicesignal-Eingangsleitungen untereinander als Funktion der von der Eingangsleitung der internen Signale über die Verwaltungseinrichtung (31) übertragenen Kennwerte, eine Einrichtung (51) zum Addieren der Toneingangsleitungen mit Ausnahme der Toneingangsleitung des der Hilfseinrichtung (AX) zugeordneten Sales (2) auf die Tonsummen-Ausgangsleitung, eine Auswahleinrichtung (52), um die einem der Säle zugeordnete Toneingangsleitung auszuwählen, in dem sich ein augenblicklicher Sprecher befindet, eine Einrichtung (54) zum Feststellen einer Anfrage zur Übertragung von Servicesignalen, die aus einem der Säle in eine der Servicesignal-Eingangsleitungen gelangt, um in die Ausgangsleitung für die internen Signale über die Verwaltungseinrichtung (31) einen Befehl zur Errichtung der Serviceverbindung zwischen den beiden Sälen zu leiten, eine Einrichtung (55) zum Übertragen einer Empfangsanzeige der Errichtung der Serviceverbindung in der Ausgangsleitung der Servicesignale, die dem Saal zugeordnet ist, in welcher der Befehl angefordert worden ist, und eine Einrichtung (53) zum Multiplexieren der Tonsummen-Ausgangsleitung und der Servicesignal-Ausgangsleitungen aufweist.

2. System nach Anspruch 1, dadurch gekennzeichnet, daß die einem der Säle (2) zugeordnete Hilfseinrichtung (AX) vor jeder Videokonferenz als Meistereinrichtung bestimmt wird, daß die Auswahleinrichtung (52) der Meisterhilfseinrichtung unter all den anderen Hilfseinrichtungen allein die Nummer der ausgewählten Toneingangsleitung in die Ausgangsleitung für die internen Signale über die Verwaltungseinrichtung (31) überträgt, und daß die anderen Hilfseinrichtungen der Meisterhilfseinrichtung untergeordnet sind und die Ziffer der ausgewählten Tonleitung nicht übertragen.

3. System nach Anspruch 1 oder 2, dadurch gekennzeichnet, daß die Auswahleinrichtung (52) zum Auswählen der Toneingangsleitung, die dem Saal zugeordnet ist, in welchem augenblicklich gesprochen wird, Schaltungen (522, 523, 524) zum Addieren der Werte in jeder der Toneingangsleitungen während einer ersten vorgegebenen Dauer (32 ms) zu einer entsprechenden Tonamplitudensumme und Schaltungen (525, 526) zum Vergleichen der Amplitudensummen im Hinblick auf die Übertragung der Nummer derjenigen Toneingangsleitung, welche die größte Amplitudensumme aufweist, in die Ausgangsleitung für die internen Signale umfaßt.

4. System nach Anspruch 3, dadurch gekennzeichnet, daß die Hilfseinrichtung (AX) eine Einrichtung (31) zum Übertragen der Nummer derjenigen Toneingangsleitung, welche die höchste Amplitudensumme in der Ausgangsleitung für die internen Signale hat, in die Schalteinrichtung (1) aufweist, wenn diese Toneingangsleitung die höchste Amplitudensumme für jede der ersten aufeinanderfolgenden Zeitabschnitte hat, die in einer Zeitspanne (TS) enthalten sind, die gleich einem Vielfachen der ersten vorgegebenen Zeitdauer (32 ms) ist.

FIG.1

CRITERE — ADDITION — STOCKAGE — TO — COMPARAISON — 52

512

CARTE VISIO CONF.

OU DES VOIES SON — 511

COMPRESSION (+ atténuation)

DECOMPRESSION (+ seuil) — 510

51 — 50 — Mém. de Cmde

DETECTION bit TELECOP. — 54

RECEPTION ACCEPTATION TELECOPIE — 55

53 — 5 — 4

6 — BUS

CARTE RESEAU DE CONNEXION

31 — MICRO PROCESSEUR

signalisation interne

HDLC

RECEPTION — 30

signalisation interne

32 — EMISSION — 3

CARTE PROCESSEUR

VOIES SON
+VOIE SIGNALISATION TELECOPIE
+VOIE SIGNALISATION INTERNE

VOIE SON
+VOIE SIGNALISATION TELECOPIE
+VOIE SIGNALISATION INTERNE

FIG.2

0 091 327

de 50 (FIG.2)        de 510 (FIG.2)

NUMERO
DE VOIE
DE SON

CRITERE — 521

ADDITIONNEUR — 522

REGISTRE — 523
TAMPON

524
MEMOIRE
VIVE

525
REGISTRE
TAMPON

A  COMPARATEUR  B
A > B

526

527  REGISTRE
TAMPON

52

VERS 6
(FIG.2)

NUMERO DE VOIE SELECTIONNE
ENVOYE A LA CARTE
PROCESSEUR TOUTES LES 32 ms

FIG.3